**Europäisches Patentamt**

**European Patent Office**

**Office européen des brevets**

(19)

(11) Veröffentlichungsnummer: **0 065 635**
**B1**

# EUROPÄISCHE PATENTSCHRIFT

(12)

(45) Veröffentlichungstag der Patentschrift:
25.04.84

(51) Int. Cl.³: **H 04 M 1/64**

(21) Anmeldenummer: **82102602.8**

(22) Anmeldetag: **27.03.82**

(54) **Automatischer Anrufbeantworter.**

(30) Priorität: **14.05.81 DE 3119080**

(43) Veröffentlichungstag der Anmeldung:
**01.12.82 Patentblatt 82/48**

(45) Bekanntmachung des Hinweises auf die Patenterteilung:
**25.04.84 Patentblatt 84/17**

(84) Benannte Vertragsstaaten:
**AT BE CH DE FR GB IT LI LU NL SE**

(56) Entgegenhaltungen:
**EP - A - 0 057 854**
**DE - A - 3 010 745**

**NACHRICHTENTECHNISCHE ZEITSCHRIFT, Band 33, Nr. 7, 1980, Seiten 458-464, Berlin, DE. P. BERWING et al.: "Endgeräte der Telekommunikation"**
**ELEKTOR, Band 2, Nr. 7-8, Juli/August 1976, Seiten 756-757, Canterbury, G.B. "Read-out brightness regulator"**

(73) Patentinhaber: **Neumann Elektronik GmbH, Bülowstrasse 104 - 110, D-4330 Mülheim 1 (DE)**

(72) Erfinder: **Neumann, Dirk, Dipl.-Ing., Schemelsbruch 11, D-4330 Mülheim 1 (DE)**

(74) Vertreter: **Feder, Heinz, Dr. et al, Dominikanerstrasse 37, D-4000 Düsseldorf 11 (DE)**

Automatischer Anrufbeantworter

Die Erfindung betrifft einen automatischen Anrufbeantworter.

Gegenstand einer älteren europäischen Patentanmeldung EP-A-57 854 ist ein automatischer Anrufbeantworter zur Abgabe mindestens eines vorgegebenen Ansagetextes in die Fernsprechleitung mit einem mikroprozessorgesteuerten elektronischen Textgeber zur Abgabe von in digitaler Form in Festwertspeichern gespeicherten Textteilen, wobei ein Ansagetext jeweils aus fest vorgegebenen Textteilen und aus variablen, aus Ziffern bestehenden in die fest vorgegebenen Textteile einfügbaren Textteilen zusammengesetzt ist und bei dem für jeden einer frei vorgebbaren Ziffer entsprechenden Textteil ein mechanisch gesteuerter Vorwahlschalter mit mehreren Schaltstellungen vorgesehen ist, wobei jede Schaltstellung einer natürlichen Zahl 0 bis 9 oder einer »Aus«-Stellung zugeordnet ist, und durch die jeweilige Stellung eines Vorwahlschalters festgelegt ist, welche gespeicherte Ziffer als variabler Textteil an einer durch diesen Schalter vorgegebenen Stelle des Ansagetextes programmgesteuert eingefügt wird.

Durch den Gegenstand der älteren Anmeldung sollte u. a. die Aufgabe gelöst werden, bestimmte Textteile, wie Datumsangaben, Uhrzeitangaben oder die Mitteilung einer Ausweich-Telefonnummer, frei vorzugeben, wobei die frei vorgebbaren Textteile auch dann erhalten bleiben sollten, wenn die Anlage durch einen Spannungsausfall über kürzere oder längere Zeit außer Betrieb ist. Gemäß der Lösung der älteren Anmeldung erfolgt die Ziffernvorgabe durch mechanisch gesteuerte Vorwahlschalter, wodurch erreicht wird, daß die eingestellten Ziffernwerte bei einem Spannungsausfall nicht verlorengehen, sondern die Anlage beim Wiederkehren der Spannung sofort wieder betriebsbereit ist und die richtige eingestellte Ansage abgeben kann.

Die der vorliegenden Erfindung zugrunde liegende Aufgabe bestand darin, eine Alternativ-Lösung der oben angegebenen Teilaufgabe der älteren Anmeldung zu schaffen, bei der auf mechanisch gesteuerte Vorwahlschalter verzichtet werden kann und elektronisch gesteuerte Schaltelemente verwendet werden können.

Die Erfindung geht aus von einer Anrufbeantworter zur Abgabe mindestens eines vorgegebenen Ansagetextes in die Fernsprechleitung mit einem elektronischen Textgeber zur Abgabe von in digitaler Form in Festwertspeichern gespeicherten Textteilen, wobei ein Ansagetext jeweils aus fest vorgegebenen Textteilen und aus variablen, aus Ziffern bestehenden in die fest vorgegebenen Textteilen einfügbaren Textteilen zusammengesetzt ist und für jeden einer frei vorgebbaren Ziffer entsprechenden Textteil eine Vorwahlschaltvorrichtung mit mehreren Schaltstellungen vorgesehen ist, wobei jede Schaltstellung einer natürlichen Zahl 0 bis 9 oder einer »Aus«-Stellung zugeordnet ist und durch die jeweilige Stellung einer Vorwahlschaltvorrichtung festgelegt ist, welche gespeicherte Ziffer als variabler Textteil an einer durch diese Schaltvorrichtung vorgegebenen Stelle des Ansagetextes programmgesteuert eingefügt wird.

Der Oberbegriff des Anspruchs 1 geht demnach von der Europäischen Patentanmeldung EP-A-57 854 aus (Prioritätstag 10. Februar 1981, Veröffentlichungstag 18. August 1982).

Die Lösung der obengenannten Aufgabe geschieht erfindungsgemäß dadurch, daß jede Vorwahlschaltvorrichtung über eine gemeinsame Taste betätigbare elektronische Schaltglieder aufweist, sowie ein mit Leuchtdioden aufgebautes Anzeigeelement, wobei die einzelnen Schaltstellungen durch Tastendruck nacheinander durchlaufen und am Anzeigeelement angezeigt werden, und daß die Stromversorgung der Vorwahlschaltvorrichtungen über die Fernsprechleitung erfolgt, wobei die Speisespannung den Anzeigeelementen mit einer vorgegebenen Taktfrequenz in Einzelimpulsen vorgegebener Breite zugeführt wird.

Die Erfindung geht von dem Grundgedanken aus, daß die Stromversorgung der Vorwahlschaltvorrichtungen von der Stromversorgung des eigentlichen Anrufbeantworters unabhängig gemacht wird und über die Fernsprechleitung erfolgt.

Dies ist aber nicht in allen Fällen ohne weiteres durchführbar, da einerseits einer Fernsprechleitung im allgemeinen nur eine sehr geringe elektrische Energie entnommen werden darf, andererseits aber vor allem die Leuchtdioden der Anzeigeelemente bei angelegter Speisespannung einen relativ hohen Stromverbrauch aufweisen. Die Erfindung macht sich die Tatsache zunutze, daß aufgrund der Trägheit des menschlichen Auges eine Leuchtdiode auch dann als gleichmäßig leuchtend empfunden wird, wenn ihre Speisespannung in einem bestimmten Rhythmus ein- und abgeschaltet wird und somit in Wirklichkeit ein Anstieg und Abfall des ausgesandten Lichtes vorhanden ist. Voraussetzung für diesen gleichmäßigen Eindruck des Auges ist natürlich, daß die Taktfrequenz einen bestimmten, an sich bekannten Mindestwert erreicht. Die Helligkeit der Leuchtdioden ist dann durch die gewählte Impulsbreite gegeben.

Durch das getaktete Zuführen der Speisespannung zu den Anzeigeelementen kann der der Fernsprechleitung zu entnehmende Speisestrom stark abgesenkt werden. Die eingespeicherte Vorwahl bleibt erhalten, solange über die Fernsprechleitung eine Speisespannung an den Vorwahlschaltvorrichtungen anliegt, auch dann, wenn etwa am Anrufbeantworter selbst zeitweise ein Spannungsausfall auftritt.

Verschiedene vorteilhafte Ausführungsformen des Gegenstandes der Erfindung sind möglich und Gegenstand der Unteransprüche.

Mit einer besonders vorteilhaften in Anspruch 2 beschriebenen Ausführungsform wird erreicht, daß die Anzeigeelemente nur zeitweise eingeschaltet werden, nämlich bei der Eingabe der variablen Textteile und bei einer eventuellen späteren Kontrolle dieser Eingabe. Dies wird erreicht durch eine zusätzliche Taste, durch welche die Tasten der Vorwahlschaltvorrichtungen entriegelt und die Anzeigeelemente eingeschaltet werden. Dabei ist es zweckmäßig, wenn gemäß Patentanspruch 4 die Spannung der Fernsprechleitung ständig über einen Widerstand mit hohem Widerstandswert anliegt, der beim Drücken der zusätzlichen Taste überbrückt wird, so daß in diesem Falle der erforderliche höhere Versorgungsstrom fließen kann. Durch einen dem Eingang der Stromversorgungseinrichtung parallelgeschalteten Speicherkondensator wird erreicht, daß auch bei einer kurzzeitigen Unterbrechung der Fernsprechleitung der vorgegebene variable Textteil, der über die Vorwahlschaltvorrichtung eingespeichert ist, nicht sofort verlorengeht, sondern entsprechend der Zeitkonstante des Speicherkondensators erhalten bleibt.

Im folgenden wird anhand der beigefügten Zeichnung ein Ausführungsbeispiel für einen Anrufbeantworter gemäß der Erfindung näher erläutert.

Als Ausführungsbeispiel wurde ein Anrufbeantworter gewählt, der relativ einfach aufgebaut ist und von dem lediglich ein Ansagetext abgegeben wird, der dem Anrufer eine Uhrzeit mitteilt, also beispielsweise der Text »Guten Tag, hier spricht ein Anrufbeantworter, bitte rufen Sie im XX Uhr wieder an«.

Selbstverständlich kann das im folgenden dargestellte Ausführungsbeispiel auch erweitert werden auf einen Anrufbeantworter, der verschiedene Ansagetexte in die Fernsprechleitung abgeben kann, in denen außer Uhrzeitangaben auch Datumsangaben oder die Mittelung einer Ausweich-Telefonnummer enthalten sein kann. Es müssen dann lediglich die entsprechenden Vorwahlschaltvorrichtungen für die Eingabe weiterer variabler Texte vorhanden sein, die genauso aufgebaut sein können wie es im folgenden anhand des einfacheren Ausführungsbeispiels beschrieben wird.

In der Zeichnung sind lediglich die Einzelheiten dargestellt, die zum Verständnis der Erfindung wesentlich sind.

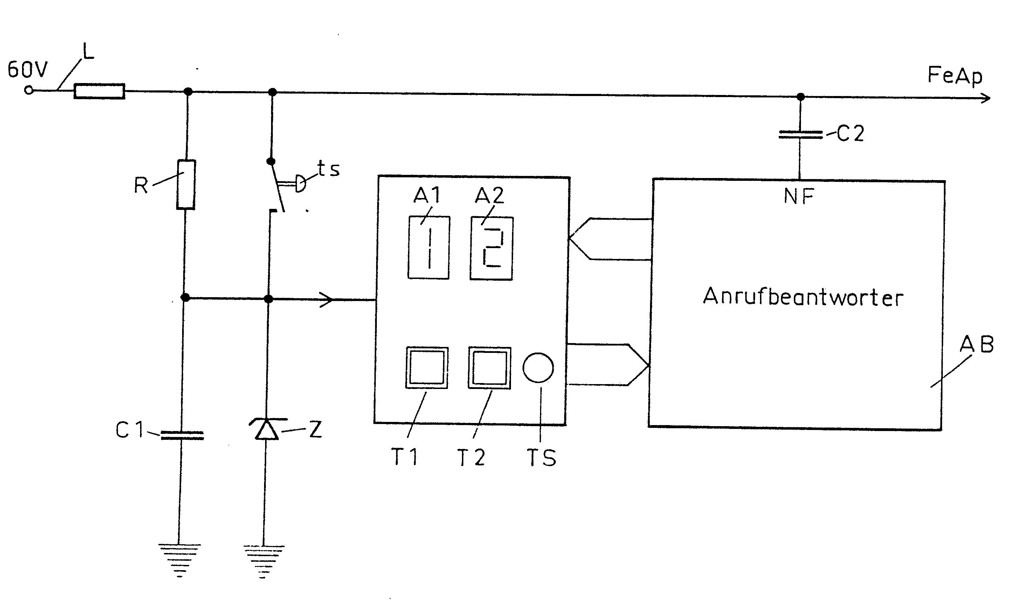

Ein Anrufbeantworter AB ist an eine Fernsprechleitung L angeschlossen. Der Anrufbeantworter AB kann beispielsweise so aufgebaut sein, wie dies anhand von Fig. 1 der älteren Anmeldung beschrieben ist. Insbesondere weist er den dort beschriebenen mikroprozessorgesteuerten elektronischen Textgeber auf. Anstelle des Vorwahlschalters 14 in Fig. 1 der älteren Anmeldung tritt beim vorliegenden Ausführungsbeispiel eine Einrichtung, die zwei Vorwahlschaltvorrichtungen zur Eingabe der Einerstelle und der Zehnerstelle einer Uhrzeit aufweist. Die Vorwahlschaltvorrichtungen können in an sich bekannter Weise mit elektronischen Schaltgliedern aufgebaut sein. Jede Vorwahlschaltvorrichtung ist über eine Taste T1 bzw. T2 betätigbar und weist ein mit Leuchtdioden aufgebautes Anzeigeelement A1 bzw. A2 auf. Weiterhin ist eine gemeinsame Taste TS vorhanden, durch deren Drücken die Tasten T1 und T2 entriegelt und der Kontakt ts geschlossen wird. Beim Drücken der Taste TS fließt der aus der Fernsprechleitung L kommende Speisestrom direkt zur Stromversorgungseinrichtung der Vorwahlschaltvorrichtungen, welche einen nicht im einzelnen dargestellten, an sich bekannten Taktgeber enthält, durch den die Speisespannung den Anzeigeelementen A1 und A2 in Einzelimpulsen einer Breite von beispielsweise 3 ms und einem zeitlichen Abstand von 24 ms zugeführt wird.

Parallel zum Schaltkontakt ts liegt ein Widerstand R mit einem sehr hohen Widerstandswert von beispielsweise 10 MΩ und parallel zum Eingang der Stromversorgungseinrichtung ist ein Speicherkondensator C1 sowie eine die Spannung stabilisierende Zenerdiode Z geschaltet. Hierdurch wird erreicht, daß auch bei geöffnetem Kontakt ts Spannung am Eingang der Stromversorgungseinrichtung liegt. Der Speicherkondensator C1 ist aufgeladen. Bei geöffnetem Kontakt ts fließt über die Leitung nur ein sehr geringer Strom von etwa 5 bis 10 µA, während bei geschlossenem Kontakt ts während der Dauer der Anzeige ein Strom von etwa 17 bis 60 mA fließt. Kurze Unterbrechungen der Fernsprechleitung L führen nicht sofort zu einer Unterbrechung der Speisespannung, die je nach der Kapazität des Speicherkondensators C1 für einige Minuten gehalten wird.

Vom Anrufbeantworter AB werden die Schaltstellungen der Vorwahlschaltvorrichtungen abgefragt und die entsprechend eingespeicherten Zeitangaben in den Ansagetext eingefügt. Im dargestellten Ausführungsbeispiel ist, wie den Anzeigeelementen A1 und A2 zu entnehmen, die Zahl 12 eingegeben. Der Anrufbeantworter gibt also den Ansagetext ab: »Guten Tag, hier spricht ein Anrufbeantworter, bitte rufen Sie um 12.00 Uhr wieder an«.

Das NF-Signal des Anrufbeantworters wird über den Kondensator C2 der Fernsprechleitung L zugeführt.

Zur Einspeicherung einer anderen Uhrzeit drückt der Benutzer zunächst die Taste TS und gibt dann durch gegebenenfalls wiederholtes Drücken der Tasten T1 und T2 eine andere Zahl vor, die während des Drückens der Taste TS an den Anzeigeelementen A1 und A2 abgelesen werden kann. Nach Loslassen der Taste TS erlischt die Anzeige, die Vorwahlschaltvorrichtungen bleiben aber in der eingestellten Schaltstellung. Will der Benutzer den eingestellten Wert überprüfen, kann er durch erneutes Drücken der Taste TS die Anzeigeelemente A1 und A2 wieder zum Aufleuchten bringen.

## Patentansprüche

1. Automatischer Anrufbeantworter (AB) zur Abgabe mindestens eines vorgegebenen Ansagetextes in die Fernsprechleitung (L) mit einem elektronischen Textgeber zur Abgabe von in digitaler Form in Festwertspeichern gespeicherten Textteilen, wobei ein Ansagetext jeweils aus fest vorgegebenen Textteilen und aus variablen, aus Ziffern bestehenden, in die fest vorgegebenen Textteile einfügbaren Textteilen zusammengesetzt ist, und für jeden einer frei vorgebbaren Ziffer entsprechenden Textteil eine Vorwahlschaltvorrichtung mit mehreren Schaltstellungen vorgesehen ist, wobei jede Schaltstellung einer natürlichen Zahl 0 bis 9 oder einer »Aus«-Stellung zugeordnet ist und durch die jeweilige Stellung einer Vorwahlschaltvorrichtung festgelegt ist, welche gespeicherte Ziffer als variabler Textteil an einer durch diese Schaltvorrichtung vorgegebenen Stelle des Ansagetextes programmgesteuert eingefügt wird, dadurch gekennzeichnet, daß jede Vorwahlschaltvorrichtung über eine gemeinsame Taste (T1, T2) betätigbare elektronische Schaltglieder aufweist, sowie ein mit Leuchtdioden aufgebautes Anzeigeelement (A1, A2), wobei die einzelnen Schaltstellungen durch Tastendruck nacheinander durchlaufen und am Anzeigeelement (A1, A2) angezeigt werden, und daß die Stromversorgung der Vorwahlschaltvorrichtungen über die Fernsprechleitung (L) erfolgt, wobei die Speisespannung den Anzeigeelementen mit einer vorgegebenen Taktfrequenz in Einzelimpulsen vorgegebener Breite zugeführt wird.

2. Anrufbeantworter nach Anspruch 1, dadurch gekennzeichnet, daß eine allen Vorwahlschaltvorrichtungen gemeinsam zugeordnete, durch eine zusätzliche Taste (TS) betätigbare, die Stromversorgung der Anzeigeelemente einschaltende Speisespannungsschaltvorrichtung (ts) vorhanden ist, wobei in Ruhestellung der zusätzlichen Taste (TS) die Anzeigeelemente (A1, A2) abgeschaltet und die Tasten (T1, T2) der Vorwahlschaltvorrichtungen verriegelt sind.

3. Anrufbeantworter nach Anspruch 1 oder 2, dadurch gekennzeichnet, daß die Tasten (T1, T2) und Anzeigeelemente (A1, A2) der Vorwahlschaltvorrichtungen in einem Tasten- bzw. Anzeigefeld zusammengefaßt sind.

4. Anrufbeantworter nach Anspruch 2 oder 3, dadurch gekennzeichnet, daß die Stromversorgungseinrichtung der Vorwahlschaltvorrichtungen über die Speisespannungsschaltvorrichtung (ts) an die Fernsprechleitung (L) angeschlossen ist, wobei parallel zur Speisespannungsschaltvorrichtung (ts) ein Widerstand (R) mit hohem Widerstandswert und parallel zum Eingang der Stromversorgungseinrichtung ein Speicherkondensator (C1) angeordnet sind.

## Claims

1. Automatic telephone responder (AB) for emitting at least one predetermined announcement text into the telephone line (L), comprising an electronic text transmitter for transmitting text portions which are stored in digital form in set-value memories, whereby one announcement text each is composed of pre-set text portions and variable text portions consisting of digits and being insertable in said pre-set text portions, and whereby for each text portion corresponding to a freely selectable number, one preselection switch assembly having a plurality of switching positions is provided, whereby each switching position is associated with one number out of the natural numbers form 0 to 9 or with an »off«-positon, and whereby the respective position of a preselection switch assembly determines which stored number is inserted in the announcement text in program-controlled manner as a varibale text portion at a position which is preselected by said switch assembly, characterized in that each preselection switch assembly comprises electronic switch elements adapted to be actuated through a common key (T1, T2), as well as an indicating element (A1, A2) including light emitting diodes, whereby the separate switching positions are sequentially passing through upon pressing said key and are shown on said indicating element (A1, A2), and that the current supply to said preselection switch assemblies is effected through said telephone line (L), whereby the supply voltage is fed to said indicating elements with a predetermined clock frequency in separate pulses of given width.

2. Telephone responder as claimed in claim 1, characterized in that there is provided an supply voltage switch assembly (ts) which is commonly associated with all of the preselection switch assemblies and which is adapted to be actuated by an additional key (TS) for switching on the current supply to the indicating elements, whereby in the rest position of said additional key (TS), said indicating elements (A1, A2) are switched off and the keys (T1, T2) of said preselection switch assemblies are locked.

3. Telephone responder as claimed in claim 1 or 2, characterized in that the keys (T1, T2) and the indicating elements (A1, A2) of the preselection switch assemblies are combined in a keyboard or indicator board, respectively.

4. Telephone responder as claimed in claim 2 or 3, characterized in that the current supply arrangement of the preselection switch assemblies is connected with the telephone line (L) through the supply voltage switch assembly (ts), whereby a resistor (R) having a high resistance value is connected parallelly to said supply voltage switch assembly (ts), and a storage capacitor (C1) is connected parallelly to the input of said current supply arrangement.

## Revendications

1. Répondeur (AB) capable de diffuser au moins un message formé par un texte préenregistré dans la ligne téléphonique (L), qui possède un générateur de texte électronique commandé par un microprocesseur pour délivrer des portions de texte mémorisées sous forme numérique dans des mémoires mortes, un message étant composé de portions de texte préenregistrées fixes et de portions de texte variables formées de chiffres et pouvant être insérées dans les portions de texte fixes, ce répondeur comportant pour chaque portion de texte variable, correspondant à un chiffre à choisir librement, un dispositif commutateur de présélection à plusieurs positions, à chacune desquelles est conjugné en entier naturel de 0 à 9 ou la fonction »arrêt«, chaque portion de texte variable, fixée par la position d'un dispositif commutateur de présélection et représentant un chiffre mémorisé, étant insérée par une commande programmée à un endroit du message prédéterminé par ce dispositif commutateur, caractérisé en ce que chaque dispositif commutateur de présélection possède des éléments de commutation électroniques commandés par une touche (T1, T2) commune, ainsi qu'un élément d'affichage (A1, A2) constitué de diodes électroluminescentes, l'enfoncement de la touche produisant le passage des différentes positions l'une après l'autre et leur indication sur l'élément d'affichage (A1, A2), et que l'alimentation électrique des dispositifs commutateurs de présélection s'effectue à travers la ligne téléphonique (L), la tension d'alimentation étant appliquée aux éléments d'affichage à une fréquence d'horloge préfixée et sous forme d'impulsions individuelles de largeur donnée.

2. Répondeur selon la revendication 1, caractérisé en ce qu'il comprend un dispositif (ts), de branchement de la tension d'alimentation, qui est commun à tous les dispositifs commutateurs de présélection, peut être commandé par une touche (TS) supplémentaire et établit l'alimentation électrique de l'élément d'affichage (A1, A2), l'agencement étant tel que, lorsque la touche (TS) supplémentaire est en position de repos, les éléments d'affichage (A1, A2) sont hors service et les touches (T1, T2) des dispositifs commutateurs de présélection sont verrouillées.

3. Répondeur selon la revendication 1 ou 2, caractérisé en ce que les touches (T1, T2) et les éléments d'affichage (A1, A2) des dispositifs commutateurs de présélection sont réunis dans une zone à toches et d'indication.

4. Répondeur selon la revendications 2 ou 3, caractérisé en ce que le dispositif d'alimentation électrique des dispositifs commutateurs de présélection est branché sur la ligne téléphonique (L) à travers le dispositif de branchement (ts) de la tension d'alimentation, une résistence (R) de valeur élevée étant branchée parallèlement à ce dispositif de branchement (ts) et un condensateur accumulateur (C1) étant branché parallèlement à l'entrée du dispositif d'alimentation électrique.

60V    L               FeAp

R

ts

A1    A2

NF

Anrufbeantworter

C2

C1    Z

T1    T2    TS

AB

0 065 635